# EUROPÄISCHE PATENTSCHRIFT

(11) **EP 1 647 568 B1**
(45) Veröffentlichungstag und Bekanntmachung des Hinweises auf die Patenterteilung: **21.01.2009**
(21) Anmeldenummer: 05021685.2
(22) Anmeldetag: 05.10.2005
(51) Int. Cl.: C08J 3/24, C08L 29/04, C08L 39/04, C08F 8/30, C08G 18/62

(54) **Polyesterfolie mit hydrophiler Beschichtung, Verfahren zu ihrer Herstellung und ihre Verwendung**
Polyester foil having hydrophilic coating, preparation and use thereof
Film de polyester ayant une couche hydrophile, méthode pour l'obtenir et son usage

(30) Priorität: 12.10.2004 DE 102004049609
(43) Veröffentlichungstag der Anmeldung: 19.04.2006
(73) Patentinhaber: Mitsubishi Polyester Film GmbH, 65203 Wiesbaden (DE)
(72) Erfinder: Konrad, Matthias, Dr., 65719 Hofheim (DE); Klein, Dagmar, Dr., 65437 Ockenheim (DE); Peiffer, Herbert, Dr. Professor, 55126 Mainz (DE); Hilkert, Gottfried, Dr., 55291 Saulheim (DE)
(74) Vertreter: Schweitzer, Klaus

(56) Entgegenhaltungen:
- EP-A- 0 848 286
- US-A- 5 262 475
- US-A1- 2004 065 578

## Beschreibung

Die Erfindung betrifft eine wässrige Beschichtungszusammensetzung, die Polyvinylpyrrolidon, ein Tensid und optional ein haftvermittelndes Polymer enthält. Diese Zusammensetzung eignet sich zur In-Line Beschichtung von biaxial orientierten Polyesterfolien. Die so erhaltenen, beschichteten Folien zeichnen sich durch eine charakteristische hydrophile Oberfläche aus, die das Beschlagen der Folie mit Wassertröpfchen verhindert (so genannte Anti-Fog-Beschichtung).

Die Verpackungsindustrie hat einen hohen Bedarf an transparenten biaxial orientierten Polyesterfolien. Werden frische, leichtverderbliche Lebensmittel mit Polyesterfolie verpackt, kann es, besonders bei gekühlten Waren, zum unerwünschten Beschlagen der Folie und somit zur Verschlechterung der Transparenz kommen, wenn Feuchtigkeit aus dem verpackten Gut an der Folie in Form von meist unterschiedlich großen Tropfen kondensiert. Dabei wird die Transparenz der Folie durch das Kondensat deutlich verschlechtert. Die Verminderung der Transparenz der Folie kann durch eine hydrophile Beschichtung, auch Antibeschlag-Beschichtung oder Anti-Fog-Beschichtung genannt, verhindert werden.

Ein anderer Bereich, in dem eine Hydrophilierung der Oberfläche gefordert wird, sind medizinische Anwendungen. Bei Diagnosestäbchen aus Polyesterfolie muss die aufgebrachte Flüssigkeit, z. B. Blut, schnell und gleichmäßig auf der Oberfläche verteilt werden. Dies kann mit einer hydrophilen Beschichtung erreicht werden.

Antibeschlag-Eigenschaften von Kunststoffoberflächen können mittels zweier verschiedener Technologien realisiert werden. Zum einen ist die Zugabe eines Additivs in das Polymer denkbar, zum anderen kann eine Antibeschlag-Beschichtung auf die Folie aufgetragen werden. Die Zugabe eines Additivs in das Polymer ist bei Polyolefinartikeln, insbesondere Folien, möglich (z .B. W02002/074535). Die Antibeschlag-Wirkung auf der Folienoberfläche beruht auf der Migration des Additivs, meist ein amphiphiles Molekül, an die Oberfläche, so dass die polaren Enden der Moleküle die eigentliche Antibeschlag-Schicht bilden. Eine Übertragung dieses Prinzips auf eine Polyesterfolie ist aufgrund der hohen Polarität des Polyesters nicht möglich.

Bekannt sind weiterhin Beschichtungen basierend auf hydrophilen wasserlöslichen Polymeren. Ein Problem dabei ist allerdings die leichte Abwaschbarkeit der Beschichtung, was durch Additive, die zur Vernetzung des Polymers führen, verhindert werden kann. Auch Tenside werden für Antibeschlag-Beschichtungen genutzt, da sie die Oberflächenspannung des Wassers herabsetzen. Diese bekannten Beschichtungen werden aber auf eine bestehende Folienoberfläche aufgebracht, d. h. die Herstellung des Substrats und die Beschichtung erfolgen in zwei Arbeitsschritten. Es wäre wünschenswert, solche Beschichtungen bereits im Herstellprozess der Polyesterfolien auf diese aufzubringen (im so genannten In-Line-Verfahren); solche Beschichtungen sind aber bisher nicht bekannt.

Aus US-A-4,467,073 ist eine transparente Antibeschlag-Beschichtung bekannt. Die Zusammensetzung enthält a) Polyvinylpyrrolidon, Polydimethylacrylamid oder ein Polyvinylpyrrolidon-Copolymer mit einem α-Olefin, b) ein Polyisocyanat-Präpolymer, c) ein Tensid und d) ein organisches Lösemittel. Nachteil dieser Erfindung ist das Verwenden eines organischen Lösemittels, speziell wenn der Beschichtungsschritt in die Folienherstellung einbezogen werden soll (In-Line). Zudem ist der Einsatz eines Isocyanates für die Verwendung in der Lebensmittelverpackung bedenklich, da kanzerogene primäre Amine entstehen können.

Die US-A-5,262,475 beschreibt eine hydrophile Zusammensetzung, die Polyvinylpyrrolidon, Polyvinylalkohol und als Vernetzer Melamin, eine Mineralsäure oder eine starke organische Säure enthält. Weiterhin kann die Beschichtungslösung Additive wie Kettenverlängerer, Schaumregulierer oder Tenside enthalten. Der Feststoffgehalt der Beschichtung beträgt 5 bis 50 %. Die Vernetzung zu harten klaren Schichten erfordert Temperaturen von mindestens 75 °C, in den Beispielen werden Temperaturen zwischen 130 und 150 °C verwendet. Damit sind diese Beschichtungen für die In-Line-Aufbringung auf Polyesterfolien ungeeignet, da die Komponenten bereits beim Trocknen bzw. beim Strecken vernetzen und die Beschichtung somit einreißt und damit zu Abreissen der Folie führen kann. Auch die Tatsache, dass die vernetzten Beschichtungen als hart beschrieben werden, lässt ihre Anwendung auf flexiblen Substraten ungeeignet erscheinen.

Aufgabe der vorliegenden Erfindung war es, eine hydrophile Beschichtungszusammensetzung bereitzustellen, die in-Line während der Herstellung biaxial orientierter Polyesterfolien, d. h. vor dem zweiten Streckschritt aufgetragen werden kann. Die so erhaltenen beschichteten Polyesterfolien sollen einen guten Antibeschlageffekt, eine hohe Abwaschresistenz und eine hohe Hydrophilie aufweisen.

Gelöst wird die Aufgabe durch die Bereitstellung einer hydrophil beschichteten Polyesterfolie, bestehend aus einer Polyesterfolie und einer ein- oder beidseitigen hydrophilen Beschichtung, wobei die Beschichtung das Trocknungsprodukt einer hydrophilen Beschichtungszusammensetzung ist, die neben Wasser.
a) Polyvinylpyrrolidon,
b) ein Tensid und
c) ein haftvermittelndes Polymeres, das Polyvinylpyrrolidon an Polymeroberflächen bindet,
enthält, wobei das haftvermittelnde Polymer ein Acrylat, hydrophiler Polyester, Polyurethan, Butadiencopolymer mit Acrylnitril oder Methylmethacrylat, Methacrylsäure oder deren Ester ist.

Die Gesamtkonzentration aller Komponenten a) bis c) in Wasser liegt bevorzugt im Bereich von 1 bis 8 Gew.-%. Sofern nichts anderes gesagt ist, handelt es sich bei allen Mengenangaben um Gewichtsprozent,

Das Polyvinylpyrrolidon wird bevorzugt mit einem Molekulargewicht (Mw) zwischen 20 und 2500 kDalton, besonders bevorzugt zwischen 40 und 1500 kDalton, eingesetzt, Der Anteil des Polyvinylpyrrolidons in der Beschichtungslösung beträgt 0,3 bis 4,0 Gew.%, bevorzugt 0,5 bis 3,5 Gew.-%. Bei Verwendung von Polyvinylpyrrolidon mit niedrigeren Molekulargewichten wird die Abwaschbeiständigkeit der Beschichtung schlechter, bei höheren Molekulargewichten wird die Beschichtungslösung zu viskos.

Unter Tensiden versteht man Moleküle, die aus einem hydrophoben und einem hydrophilen Teil bestehen, man sagt, sie sind amphiphil.

Das in der oben beschriebenen Beschichtungszusammensetzung genannte Tensid wird in einer Konzentration von 0,1 bis 2,5 Gew.-%, bevorzugt von 0,3 bis 2,0 Gew.-%, verwendet und ist bevorzugt ein ionisches, besonders bevorzugt ein anionisches Tensid und wird besonders bevorzugt aus der Gruppe der Alkylsulfate, Alkylbenzolsulfate, Alkylethersulfate oder Sulfobernsteinsäureester gewählt.

Die Polymere, die die Anbindung des Polyvinylpyrrolidons an die Polyesteroberfläche verbessern, werden bevorzugt in Form einer wässrigen Lösung oder Dispersion eingesetzt. Die Konzentration in der fertigen Beschichtungslösung beträgt 0,3 bis 4,0 Gew.-%, bevorzugt 0,5 bis 3,5 Gew.-%. Geeignete Polymere dieser Art sind Acrylate wie sie beispielsweise beschrieben sind in der WO94/13476, hydrophile Polyester (5-Na-sulfoisophthalsäurehaltiger PET/IPA-Polyester wie sie beispielsweise beschrieben sind in der EP-A-0 144 878, US-A-4,252,885 oder EP-A-0 296 620; dendritische Polyester mit Alkohol oder Säureendgruppen), Polyurethane, Butadiencopolymere mit Acrylnitril oder Methylmethacrylat, Methacrylsäure oder deren Ester.

Die Acrylate bestehen bevorzugt aus einem Ester der Methacrylsäure, insbesondere einem Alkylester, dessen Alkylgruppe bis zu zehn C-Atome enthält, wie z. B. die Methyl-, Ethyl-, n-Propyl-, Isopropyl-, n-Butyl-, Isobutyl-, tertiäre Butyl-, Hexyl-, 2-Ethylhexyl-, Heptyl- und n-Octylgruppe. Acrylcopolymere, die von einem niederen Alkylacrylat (C1 bis C4) abgeleitet sind, insbesondere Ethylacrylat, ergeben zusammen mit einem niederen Alkylmethacrylat eine besonders gute Haftung zur Polyesterfolie. Zudem werden bevorzugt geeignete Comonomere eingesetzt wie z. B. N- Methylolacrylamid, N-Methylolmethacrylamid und die entsprechenden Ether; Carboxylgruppen enthaltende Monomere wie z. B. Crotonsäure, Itaconsäure, Maleinsäure oder Acrylsäure; Anhydride wie z. B. Maleinsäureanhydrid oder Itaconsäureanhydrid; Hydroxylgruppen enthaltende Monomere wie z. B. Allylalkohol und Hydroxyethyl- oder Hydroxypropylacrylat oder-methacrylat und Amide wie z. B. Acrylamid, Methacrylamid oder Maleinsäureamid. Mit solchen Acrylatcopolymeren ergibt sich eine besonders gute Haftung zwischen der Polyesterfolie und dem Polyvinylpyrrolidon.

Optional kann die Beschichtung Antiblockmittel enthalten. Übliche Antiblockmittel sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Titandioxid, Kaolin oder vernetzte Polystyrol- oder Arcrylat-Partikel. Bevorzugt wird poröses SiO₂ wie amorphe Kieselsäure, da damit die Wasserverteilung auf der Oberfläche der Folie gefördert wird.

Damit besteht die Beschichtungszusammensetzung bevorzugt nur aus Wasser und den Komponenten a), b) und c) sowie ggf. Antiblockmitteln. "Bestehen" bedeutet hier, dass die Zusammensetzung zu mindestens 90 Gew.%, bevorzugt mindestens 95 Gew.-% und besonders bevorzugt mindestens 99 Gew.-%, aus den vorgenannten Substanzen besteht.

Nach der In-Line-Beschichtung besteht die Beschichtung aus dem getrockneten Rückstand (Trocknungsprodukt) der Beschichtungszusammensetzung, die dann ebenso bevorzugt nur aus dem Trocknungsprodukt der Komponenten a), b) und c) sowie ggf. Antiblockmitteln besteht.

Die erfindungsgemäße Beschichtung kann verwendet werden, um biaxial orientierte Polyesterfolie in-Line zu beschichten, d. h. die Beschichtung wird während des Folienherstellprozesses vor der Längs- und/oder Querstreckung aufgebracht. Um eine gute Benetzung der Polyesterfolie mit der wässrigen Lösung zu erreichen, wird die Oberfläche bevorzugt zunächst coronabehandelt. Die Beschichtung kann mit einem gängigen geeigneten Verfahren wie mit einem Schlitzgießer oder einem Sprühverfahren aufgetragen werden. Besonders bevorzugt ist die Aufbringung der Beschichtung mittels des "Reverse gravure-roll coating"-Verfahrens, bei dem sich die Beschichtung äußerst homogen mit Antragsgewichten zwischen 1,0 und 3,0 g/m² auftragen lässt. Ebenfalls bevorzugt ist die Auftragung durch das Meyer-Rod-Verfahren, mit dem sich größere Beschichtungsstärken erzielen lassen. Die Beschichtung auf der fertigen Folie weist eine Dicke von 5 bis 500 nm, bevorzugt 30 bis 200 nm, auf.

Die Beschichtungskomponenten können während der Trocknung und Verstreckung der Polyesterfolie und besonders bei der anschließenden Wärmebehandlung, die bis zu 240 °C erreichen kann, miteinander reagieren. Das Reaktionsprodukt liefert speziell auf einer biaxial verstreckten Polyesterfolie einen guten Antibeschlageffekt, eine hohe Abwaschresistenz und eine hohe Hydrophilie.

Die Polyesterfolie, auf die die Beschichtung aufgebracht wird, kann sowohl einschichtig aufgebaut sein, zweischichtig aus einer Basisschicht (B) und einer Deckschicht (A), als auch dreischichtig aus einer Basisschicht (B) und zwei Deckschichten (A) und (A' bzw. C).

Die Gesamtdicke der Polyesterfolie liegt üblicherweise im Bereich von 5 bis 500 µm, vorzugsweise von 10 bis 350 µm.

Die Polyesterfolie kann transparent, weiß, opak, glänzend oder matt sein. Diese verschiedenen optischen Eigenschaften erreicht man beispielsweise durch die Zugabe von unterschiedlichen Mengen an Additiven wie Calciumcarbonat, amorpher Kieselsäure oder Titandioxid. Diese Additive können sowohl in der Basisschicht als auch in den eventuell vorhandenen Deckschichten enthalten sein.

Weiterhin kann die Polyesterfolie siegelfähig und peelfähig sein. Dies wird gewöhnlich durch Verwendung von Polyestern mit niedriger Glasübergangstemperatur oder von anderen siegelfähigen Polymeren in mindestens einer Deckschicht erreicht.

Die Polyesterfolie ist hauptsächlich aus thermoplastischem Polyester aufgebaut. Solche Polyester sind im "Handbook of Thermoplastic Polyesters, Ed. S. Fakirov, Wiley-VCH, 2002" genannt. Beispiele sind Polyester aus Ethylenglykol und Terephthalsäure (= Polyethylenterephthalat, PET), aus Ethylenglycol und Naphthalin-2,6-dicarbonsäure (= Polyethylen-2,6-naphthalat, PEN) sowie aus 1,4-Bis-hydroxymethylcyclohexan und Terephthalsäure [= Poly(1,4-cyclohexandimethylenterephthalat), PCDT].

Das Herstellungsverfahren für Polyesterfolien wird z. B. beschrieben im "Handbook of Thermoplastic Polyesters, Ed. S. Fakirov, Wiley-VCH, 2002" oder im Kapitel "Polyesters, Films" in der "Encyclopedia of Polymer Science and Engeneering, Vol. 12, John Wiley & Sons, 1988". Bei dem bevorzugtem Extrusionsverfahren zur Herstellung der Folie wird das aufgeschmolzene Polymermaterial gegebenenfalls mit den Additiven durch eine Schlitzdüse extrudiert und als weitgehend amorphe Vorfolie auf einer Kühlwalze abgeschreckt. Diese Folie wird anschließend erneut erhitzt und in mindestens einer Richtung - entweder in Maschinenrichtung (MD) oder in Querrichtung (TD) -, bevorzugt aber in Längs- und Querrichtung bzw. in Quer- und Längsrichtung bzw. in Längs-, in Quer- und nochmals in Längsrichtung und/oder Querrichtung, verstreckt ("orientiert"). Die Folientemperaturen im Streckprozess liegen im allgemeinen 10 bis 60 °C über der Glasübergangstemperatur Tg des verwendeten Polyesters, das Streckverhältnis der Längsstreckung liegt üblicherweise bei 2,0 bis 6,0, insbesondere bei 3,0 bis 4,5, das der Querstreckung bei 2,0 bis 5,0, insbesondere bei 3,0 bis 4,5, und das der gegebenenfalls durchgeführten zweiten Längs- und Querstreckung bei 1,1 bis 5,0. Die Längsstreckung kann auch gleichzeitig mit der Querstreckung (Simultanstreckung) oder in jeder denkbaren Sequenzfolge durchgeführt werden. Es folgt die Thermofixierung der Folie bei Ofentemperaturen von 180 bis 260 °C, insbesondere von 220 bis 250 °C. Anschließend wird die Folie abgekühlt und gewickelt.

Die nachstehende Tabelle fasst die wichtigsten erfindungsgemäßen Eigenschaften der Beschichtung noch einmal zusammen:

**Tabelle**

| Beschichtungskomponenten | Erfindungsgemäßer Bereich | Bevorzugt | Einheit |
|---|---|---|---|
| Polyvinylpyrrolidon, Anteil | 0,3 bis 4,0 | 0,5 bis 3,5 | Gew.-% |
| Polyvinylpyrrolidon, M_{w} | 20 bis 2500 | 40 bis 1500 | kDalton |
| Tensid, Anteil | 0,1 bis 2,5 | 0,3 bis 2,0 | Gew.-% |
| optionales Polymer, Anteil | 0,3 bis 4,0 | 0,5 bis 3,5 | Gew.-% |
| Dicke der Beschichtung | 5 bis 500 | 30 bis 200 | nm |

Um die Wirksamkeit der Beschichtungen zu testen, wurden Polyesterfolien beschichtet und diese mit den folgenden Messmethoden charakterisiert.

Die Oberflächenspannung der Folien ist so hoch (> 70 mN/m), dass sie mit der Kontaktwinkelmethode nicht gemessen werden kann, da der Wassertropfen sehr flach ist.

### Bestimmung der Antibeschlag-Wirkung

Die Antibeschlag-Eigenschaften der Polyesterfolien wurden wie folgt bestimmt:

In einem auf 23 °C und 50 % relative Luftfeuchtigkeit temperierten Labor wurden Folienmuster auf eine Menüschale (Länge ca. 17 cm, Breite ca. 12 cm, Höhe ca. 3 cm) aus amorphem Polyethylenterephthalat, die ca. 50 ml Wasser enthielt, geschweißt.

Die Schalen wurden in einem auf 4 °C temperierten Kühlschrank gelagert und nach jeweils 10 min, 30 min, 4 h, 8 h und 24 h zur Beurteilung entnommen. Die Kondensatbildung beim Abkühlen der 23 °C warmen Luft auf Kühlschranktemperatur wurde geprüft. Eine mit einem wirksamen Antibeschlag-Mittel ausgerüstete Folie ist auch nach der Kondensatbildung transparent, da das Kondensat beispielsweise einen zusammenhängenden, transparenten Film bildet. Ohne wirksames Antibeschlag-Mittel führt die Bildung eines feinen Tröpfchennebels auf der Folienoberfläche zu einer verminderten Transparenz der Folie; im ungünstigsten Fall ist der Inhalt der Menüschale nicht mehr sichtbar.

Eine weitere Untersuchungsmethode ist der so genannte Heiß-Dampf- oder Hot-Fog-Test. Dazu wird ein 250 ml-Becherglas, das 50 ml Wasser enthält und mit der zu prüfenden Folie bespannt ist, in ein auf 70 °C temperiertes Wasserbad gestellt (Umgebungstemperatur 23 °C). Die Beurteilung ist die gleiche wie oben beschrieben. Zusätzlich kann man mit diesem Test die Langzeit-Antibeschlag-Wirkung bzw. die Abwaschbeständigkeit der Folie prüfen, da der Dampf ständig an der Folie kondensiert und wieder abläuft oder abtropft. Leichtlösliche Substanzen werden so abgewaschen und die Antibeschlag-Wirkung lässt nach.

### Messung der Transparenz und Trübung

Die Messung an den beschichteten Polyesterfolien erfolgt am Hazegard Hazemeter XL-211 der Fa. BYK Gardner in Anlehnung an ASTM-D 1033-77 für die Transparenz und an ASTM-D 1003-61 für die Trübung.

Im Folgenden wird die Erfindung anhand von Beispielen näher erläutert.

### Beispiel 1

Zur Herstellung der Beschichtungslösung wurden folgende Komponenten in Wasser gelöst:

| | |
|---|---|
| 2,0 Gew.-% | Polyvinylpyrrolidon (®Luvitec K30; BASF AG, Mw ~50 kDalton) |
| 1,0 Gew.-% | Diethylhexylsulfosuccinat Natriumsalz (®Lutensit A-BO; BASF AG). |

### (die Gew.-%-Angaben beziehen sich auf die fertige Beschichtungslösung)

Diese Beschichtungslösung wurde nach dem folgenden Verfahren auf Polyesterfolie aufgebracht:

Aus Polyethylenterephthalat wurde eine Schmelze hergestellt und diese durch eine Breitschlitzdüse auf eine auf etwa 20 °C gehaltene Gießwalze extrudiert, wo sie zu einer unorientierten Folie erstarrte. Die unorientierte Folie wurde im Streckverhältnis von 3,8:1 längsgestreckt, wobei sie auf einer Temperatur von 115 °C gehalten wurde. Die längsgestreckte Folie wurde in einem Coronaentladegerät coronabehandelt und danach durch Reversgravurbeschichtung mit der oben beschriebenen Lösung aus Polyvinylpyrrolidon und Diethylhexylsulfosuccinat Natriumsalz beschichtet. Die längsgestreckte, coronabehandelte Folie wurde bei einer Temperatur von 100 °C getrocknet. Danach wurde die Folie im Streckverhältnis 3,8:1 quergestreckt, so dass man eine biaxial gestreckte Folie erhielt. Die biaxial gestreckte Folie wurde bei 230 °C thermofixiert. Die Endfoliendicke war 25 µm. Das Trockengewicht der Beschichtung betrug ca. 0,04 g/m².

Die Folie zeigte sehr gute Antibeschlag-Eigenschaften, d. h. die Bildung feiner Tröpfchen wurde nicht beobachtet, gleichzeitig war die Abwaschbeständigkeit der Beschichtung gut. Die Transparenz und die Trübung der Folie blieben beim Antibeschlag-Test unverändert.

### Beispiel 2

Analog Beispiel 1 wurde folgende Zusammensetzung der Beschichtungslösung verwendet:

| | |
|---|---|
| 2,0 Gew.-% | Polyvinylpyrrolidon (Luvitec K30; BASF AG, Mw -50 kDalton) |
| 1,0 Gew.-% | Acrylat-Copolymer, bestehend aus 60 Gew.-% Methylmethacrylat, 35 Gew.-% Ethylacrylat und 5 Gew.-% N-Methylolacrylamid |
| 1,0 Gew.-% | Diethylhexylsulfosuccinat Natriumsalz (Lutensit A-BO BASF AG). |

Das Trockengewicht der Beschichtung betrug ca. 0,04 g/m² bei einer Dicke der Trägerfolie von ca. 50 µm.

Wie Beispiel 1 zeigte auch diese Folie sehr gute Antibeschlag-Eigenschaften, gleichzeitig war die Abwaschbeständigkeit der Beschichtung verbessert, d. h. die Antibeschlag-Eigenschaften blieben auch nach mehreren Stunden Behandlung mit Dampf noch erhalten. Die Transparenz und die Trübung der Folie blieben beim Antibeschlag-Test unverändert.

### Beispiel 3

Analog Beispiel 1 wurde folgende Zusammensetzung der Beschichtungslösung verwendet:

| | |
|---|---|
| 1,5 Gew.-% | Polyvinylpyrrolidon (Luvitec K60; BASF AG, Mw ∼450 kDalton) |
| 1,0 Gew.-% | Copolymer aus Acrylsäure und Maleinsäure (Aldrich, Mw ~3 kDalton) |
| 1,0 Gew.-% | Laurylsulfat Natriumsalz. |

Das Trockengewicht der Beschichtung betrug ca. 0,06 g/m² bei einer Dicke der Trägerfolie von ca. 12 µm.

Die Folie zeigte sehr gute Antibeschlag-Eigenschaften, gleichzeitig war die Abwaschbeständigkeit der Beschichtung sehr gut. Die Transparenz und die Trübung der Folie blieben beim Antibeschlag-Test unverändert.

### Vergleichsbeispiel

Analog Beispiel 1 wurde eine biaxial orientierte Polyesterfolie hergestellt, allerdings ohne Beschichtung.

Beim Antibeschlag-Test zeigte die Folie starke Tröpfchenbildung, d. h. die Folie hatte keinen Antibeschlag-Effekt.

## Patentansprüche

1. Hydrophil beschichtete Polyesterfolie, bestehend aus einer Polyesterfolie und einer ein- oder beidseitigen hydrophilen Beschichtung, **dadurch gekennzeichnet, dass** die Beschichtung das Trocknungsprodukt einer hydrophilen Beschichtungszusammensetzung ist, die Wasser, Polyvinylpyrrolidon, ein haftvermittelndes Polymeres, das Polyvinylpyrrolidon an Polymeroberflächen bindet, und ein Tensid enthält, wobei das haftvermittelnde Polymer ein Acrylat, hydrophiler Polyester, Polyurethan, Butadiencopolymer mit Acrylnitril oder Methylmethacrylat, Methacrylsäure oder deren Ester ist.

2. Polyesterfolie nach Anspruch 1, **dadurch gekennzeichnet, dass** das Tensid ein ionisches Tensid ist.

3. Polyesterfolie nach Anspruch 2, **dadurch gekennzeichnet, dass** das Tensid ein anionisches Tensid, ausgewählt aus der Gruppe, bestehend aus Alkylsulfaten, Alkylbenzolsulfaten, Alkylethersulfaten oder Sulfobernsteinsäureestern, ist.

4. Polyesterfolie nach einem der Ansprüche 1 bis 3, **dadurch gekennzeichnet, dass** die Beschichtungszusammensetzung zusätzlich ein Antiblockmittel enthält.

5. Polyesterfolie nach Anspruch 4, **dadurch gekennzeichnet, dass** das Antiblockmittel aus anorganischen und/oder organischen Partikeln besteht.

6. Polyesterfolie nach einem der Ansprüche 1 bis 5, **dadurch gekennzeichnet, dass** das Polyvinylpyrrolidon ein Molekulargewicht von 20 bis 2500 kDa besitzt.

7. Polyesterfolie nach einem der Ansprüche 1 bis 6, **dadurch gekennzeichnet, dass** das Polyvinylpyrrolidon in der Zusammensetzung in einer Menge von 0,3 bis 4,0 Gew.% (bezogen auf das Gewicht der wässrigen Beschichtungszusammensetzung) vorhanden ist.

8. Polyesterfolie nach einem der Ansprüche 1 bis 7, **dadurch gekennzeichnet, dass** das Tensid in der Zusammensetzung in einer Menge von 0,1 bis 2,5 Gew.% (bezogen auf das Gewicht der wässrigen Beschichtungszusammensetzung) vorhanden ist.

9. Polyesterfolie nach einem der Ansprüche 4 bis 8, **dadurch gekennzeichnet, dass** das haftvermittelnde Polymer in der Zusammensetzung in einer Menge von 0,3 bis 4,0 Gew.-% (bezogen auf das Gewicht der wässrigen Beschichtungszusammensetzung) vorhanden ist.

10. Polyesterfolie nach einem der Ansprüche 1 bis 9, **dadurch gekennzeichnet, dass** sie einschichtig aufgebaut ist.

11. Polyesterfolie nach einem der Ansprüche 1 bis 9, **dadurch gekennzeichnet, dass** sie zwei- oder mehrschichtig aufgebaut ist.

12. Polyesterfolie nach einem der Ansprüche 1 bis 11, **dadurch gekennzeichnet, dass** sie eine Gesamtdicke von 5 bis 500 µm aufweist.

13. Polyesterfolie nach einem der Ansprüche 1 bis 12, **dadurch gekennzeichnet, dass** die hydrophile Beschichtung eine Dicke von 5 bis 500 nm aufweist.

14. Polyesterfolie nach einem der Ansprüche 1 bis 13, **dadurch gekennzeichnet, dass** sie transparent, weiß, opak, glänzend oder matt ist.

15. Polyesterfolie nach einem der Ansprüche 1 bis 14, **dadurch gekennzeichnet, dass** sie biaxial verstreckt ist.

16. Verfahren zur Herstellung einer hydrophil beschichteten Polyesterfolie nach Anspruch 1, wobei man Polyesterchips in einem Extruder aufschmilzt, durch eine Breitschlitzdüse extrudiert, auf einer Kühlwalze abkühlt, streckt, thermofixiert und aufwickelt, **dadurch gekennzeichnet, dass** sie nach der Abkühlung auf der Kühlwalze und vor dem Aufwickeln mit einer hydrophilen Beschichtungszusammensetzung, die Wasser, Polyvinylpyrrolidon, ein haftvermittelndes Polymeres und ein Tensid enthält, beschichtet wird.

17. Verfahren nach Anspruch 16, **dadurch gekennzeichnet, dass** die Polyesterfolie vor der Beschichtung mit der hydrophilen Beschichtungszusammensetzung einer Koronabehandlung unterzogen wird.

18. Verfahren nach Anspruch 16 oder 17, **dadurch gekennzeichnet, dass** die hydrophile Beschichtungszusammensetzung mittels einer oder mehrerer Reverse-Gravure-Walzen auf die Polyesterfolie aufgetragen wird.

19. Verwendung einer hydrophil beschichtete Polyesterfolie nach Anspruch 1 zur Verpackung von Lebensmitteln.

20. Verwendung einer hydrophil beschichtete Polyesterfolie nach Anspruch 1 zur Herstellung von medizinischen Diagnosemitteln.

## Claims

1. A hydrophilically coated polyester film consisting of a polyester film and a hydrophilic coating on one or both sides, wherein the coating is the drying product of a hydrophilic coating composition which comprises water, polyvinylpyrrolidone, an adhesion-promoting polymer which binds polyvinylpyrrolidone to polymer surfaces, and a surfactant, said adhesion-promoting polymer being an acrylate, hydrophilic polyester, polyurethane, butadiene copolymer with acrylonitrile or methyl methacrylate, methacrylic acid or an ester thereof.

2. The polyester film as claimed in claim 1, wherein the surfactant is an ionic surfactant.

3. The polyester film as claimed in claim 2, wherein the surfactant is an anionic surfactant selected from the group consisting of alkylsulfates, alkylbenzenesulfates, alkyl ether sulfates or sulfosuccinic esters.

4. The polyester film as claimed in one of claims 1 to 3, wherein the coating composition additionally comprises an antiblocking agent.

5. The polyester film as claimed in claim 4, wherein the antiblocking agent consists of inorganic and/or organic particles.

6. The polyester film as claimed in one of claims 1 to 5, wherein the polyvinylpyrrolidone has a molecular weight of from 20 to 2500 kDa.

7. The polyester film as claimed in one of claims 1 to 6, wherein the polyvinylpyrrolidone is present in the composition in an amount of from 0.3 to 4.0 % by weight (based on the weight of the aqueous coating composition).

8. The polyester film as claimed in one of claims 1 to 7, wherein the surfactant is present in the composition in an amount of from 0.1 to 2.5 % by weight (based on the weight of the aqueous coating composition).

9. The polyester film as claimed in one of claims 4 to 8, wherein the adhesion-promoting polymer is present in the composition in an amount of from 0.3 to 4.0 % by weight (based on the weight of the aqueous coating composition).

10. The polyester film as claimed in one of claims 1 to 9, which has a single-layer structure.

11. The polyester film as claimed in one of claims 1 to 9, which has a two-layer or multilayer structure.

12. The polyester film as claimed in one of claims 1 to 11, which has a total thickness of from 5 to 500 µm.

13. The polyester film as claimed in one of claims 1 to 12, wherein the hydrophilic coating has a thickness of from 5 to 500 nm.

14. The polyester film as claimed in one of claims 1 to 13, which is transparent, white, opaque, glossy or matt.

15. The polyester film as claimed in one of claims 1 to 14, which has been biaxially oriented.

16. A process for producing a hydrophilically coated polyester film as claimed in claim 1, in which polyester chips are melted in an extruder, extruded through a slot die, cooled on a chill roll, stretched, heat-set and wound up, which comprises, after the film has been cooled on the chill roll and before it has been wound up, coating it with a hydrophilic coating composition which comprises water, polyvinylpyrrolidone, an adhesion-promoting polymer and a surfactant.

17. The process as claimed in claim 16, wherein the polyester film is subjected to a corona treatment before it is coated with the hydrophilic coating composition.

18. The process as claimed in claim 16 or 17, wherein the hydrophilic coating composition is applied to the polyester film by means of one or more reverse gravure rolls.

19. The use of a hydrophilically coated polyester film as claimed in claim 1 for packaging foods.

20. The use of a hydrophilically coated polyester film as claimed in claim 1 for producing medical diagnostic aids.

## Revendications

1. Film de polyester à revêtement hydrophile, consistant en un film de polyester et un revêtement hydrophile sur une face ou les deux, **caractérisé en ce que** le revêtement est le produit de séchage d'une composition de revêtement hydrophile qui contient de l'eau, de la polyvinylpyrrolidone, un polymère promouvant l'adhérence, qui lie de la polyvinylpyrrolidone à des surfaces de polymères, et un tensioactif, le polymère promouvant l'adhérence étant un acrylate, un polyester hydrophile, un polyuréthanne, un copolymère de butadiène avec l'acrylonitrile ou le méthacrylate de méthyle, l'acide méthacrylique ou un ester de celui-ci.

2. Film de polyester selon la revendication 1, **caractérisé en ce que** le tensioactif est un tensioactif ionique.

3. Film de polyester selon la revendication 2, **caractérisé en ce que** le tensioactif est un tensioactif anionique choisi dans le groupe constitué par des alkylsulfates, des alkylbenzènesulfates, des alkyléthersulfates et des esters d'acide sulfosuccinique.

4. Film de polyester selon l'une quelconque des revendications 1 à 3, **caractérisé en ce que** la composition de revêtement contient en outre un agent anti-adhérence de contact.

5. Film de polyester selon la revendication 4, **caractérisé en ce que** l'agent anti-adhérence de contact consiste en des particules organiques et/ou des particules inorganiques.

6. Film de polyester selon l'une quelconque des revendications 1 à 5, **caractérisé en ce que** la polyvinylpyrrolidone a une masse moléculaire de 20 à 2 500 kDa.

7. Film de polyester selon l'une quelconque des revendications 1 à 6, **caractérisé en ce que** la polyvinylpyrrolidone est présente dans la composition en une proportion de 0,3 à 4,0 % en poids (par rapport au poids de la composition aqueuse de revêtement).

8. Film de polyester selon l'une quelconque des revendications 1 à 7, **caractérisé en ce que** le tensioactif est présent dans la composition en une proportion de 0,1 à 2,5 % en poids (par rapport au poids de la composition aqueuse de revêtement).

9. Film de polyester selon l'une quelconque des revendications 4 à 8, **caractérisé en ce que** le polymère promouvant l'adhérence est présent dans la composition en une proportion de 0,3 à 4,0 % en poids (par rapport au poids de la composition aqueuse de revêtement).

10. Film de polyester selon l'une quelconque des revendications 1 à 9, **caractérisé en ce qu'**il a une structure monocouche.

11. Film de polyester selon l'une quelconque des revendications 1 à 9, **caractérisé en ce qu'**il a une structure bicouche ou multicouche.

12. Film de polyester selon l'une quelconque des revendications 1 à 11, **caractérisé en ce qu'**elle présente une épaisseur totale de 5 à 500 µm.

13. Film de polyester selon l'une quelconque des revendications 1 à 12, **caractérisé en ce que** le revêtement hydrophile présente une épaisseur de 5 à 500 nm.

14. Film de polyester selon l'une quelconque des revendications 1 à 13, **caractérisé en ce qu'**il est transparent, blanc, opaque, brillant ou mat.

15. Film de polyester selon l'une quelconque des revendications 1 à 14, **caractérisé en ce qu'**il est étiré biaxialement.

16. Procédé pour la fabrication d'un film de polyester à revêtement hydrophile selon la revendication 1, dans lequel on fait fondre dans une extrudeuse des pastilles de polyester, le produit est extrudé à travers une filière plate, refroidi sur un cylindre refroidisseur, étiré, thermofixé et enroulé, **caractérisé en ce qu'**après le refroidissement sur le cylindre refroidisseur et avant l'enroulement, on le revêt avec une composition de revêtement hydrophile qui contient de l'eau, de la polyvinylpyrrolidone, un polymère promouvant l'adhérence et un tensioactif.

17. Procédé selon la revendication 16, **caractérisé en ce que** le film de polyester est soumis à un traitement par corona avant le revêtement avec la composition de revêtement hydrophile.

18. Procédé selon la revendication 16 ou 17, **caractérisé en ce que** la composition de revêtement hydrophile est appliquée sur le film de polyester au moyen d'un ou plusieurs cylindres de gravure inverse.

19. Utilisation d'un film de polyester à revêtement hydrophile selon la revendication 1, pour le conditionnement de denrées alimentaires.

20. Utilisation d'un film de polyester à revêtement hydrophile selon la revendication 1, pour la fabrication de produits de diagnostic médicaux.
